# EUROPEAN PATENT SPECIFICATION

(11) **EP 1 726 675 B1**
(45) Date of publication and mention of the grant of the patent: **03.07.2019**
(21) Application number: 06114522.3
(22) Date of filing: 24.05.2006
(51) Int. Cl.: C22C 38/04, C22C 38/12, C22C 38/16, C22C 38/08, B32B 15/01, C22C 38/00, C22C 38/02, C22C 38/06, C22C 38/42, C22C 38/44, C22C 38/46, C22C 38/48, C22C 38/50, C22C 38/58, C21D 8/02, C21D 9/08, C21D 1/25

(54) **Base material for a clad steel and method for the production of clad steel from same**
Grundmaterial für einen plattierten Stahl und Vefahren zur Herstellung von einem daraus hergestellten plattierten Stahl
Materiau de base pour un acier plaqué et méthode de production d' un acier plaqué à partir de celui-ci

(30) Priority: 25.05.2005 JP 2005152040
(43) Date of publication of application: 29.11.2006
(73) Proprietor: THE JAPAN STEEL WORKS, LTD., Tokyo 100-0006 (JP)
(72) Inventor: NITTA, Yukio, Muroran-shi, Hokkaido 051-0006 (JP); KAYANO, Rinzo, Muroran-shi, Hokkaido 051-0006 (JP); SAKURABA, Masahiro, Muroran-shi, Hokkaido 051-0006 (JP)
(74) Representative: Intès, Didier Gérard André

(56) References cited:
- EP-A1- 1 221 493
- EP-A1- 1 416 059
- WO-A1-2004/111286
- JP-A- H1 161 328
- JP-A- H07 290 245
- JP-A- H10 298 645
- JP-A- 2001 059 132
- JP-A- 2002 283 024
- JP-A- 2003 183 767

## Description

### BACKGROUND OF THE INVENTION

### 1. Field of the Invention

The present invention relates to a clad steel for use in natural gas pipe line or the like which is produced by quenching/tempering (hereinafter referred to as "refining") and a method for the production thereof and more particularly to a matrix for clad steel which is required to have a good low temperature toughness and exhibits an excellent low temperature toughness in heat affected zone by one-pass welding and a method for the production of a clad steel from the matrix for clad steel .

### 2. Description of the Related Art

A clad steel sheet has different purposes and is produced by different production methods depending on the cladding material. A related art clad steel matrix is a steel material corresponding to API (American Petroleum Institute's Regulation) X70 made of a clad steel sheet or pipe material comprising C, Si and Mn as main component, and Nb, V, Ca, Al and Mo are added therein or a slight amount of alloying components such as Ti and B are added therein. This steel is produced by a predetermined quenching/tempering (refining) method or thermo-mechanical control process (TMCP) by converter. In order to prepare a clad steel pipe, the clad steel is subjected to one-pass high efficiency welding on both sides thereof. In multi-pass welding, the bond of the matrix with the weld metal and the heat affected zone in the matrix are affected by the heat during the subsequent passes to undergo fine division. However, in one-pass welding, grain of the bond of the matrix with the weld metal and the heat affected zone in the matrix remain coarse, causing the deterioration of toughness.

In recent years, the users have demanded more strict specifications for low temperature toughness. This is because the users point out that when the operation of the pipe line is suspended in emergency, the pipe line can be subject to a strict atmosphere of -40°C at various sites thereof, causing a risk of brittle fracture. Therefore, it has been recently usual to require that the impact resistance of the bond of the matrix with the weld metal and the heat affected zone in the matrix is 35 (J) or more at -40°C. However, the related art refined steel material finds great difficulty in meeting this demand. In particular, the steel products obtained by one-pass welding can show an impact resistance of 35 (J) maximum at vE-20°C. Thus, it is very difficult for a high strength API X70 steel material to assure desired low temperature toughness in welded the HAZ (Heat Affected Zone), not to mention low temperature toughness in the matrix, and hence satisfy the user's specification for low temperature toughness of 35 (J) or more at vE-40°C.

Referring to technique for improving the related art clad steel matrix, JP-B-55-26164 proposes adding Ti, N, Nb, V and B to C, Si, Mn and Al so that fine TiN grains are precipitated in the steel to reduce the size of austenite grains in the HAZ, enhancing the toughness of the matrix. In this approach, the matrix shows an impact resistance of 20 kg·m at vE0°C and FATT (Fracture Appearance Transition Temperature) of about -50°C and the HAZ shows an impact resistance of 20 kg·m at vE0°C in multi-pass welding. However, since most TiN grains undergo solid solution in the HAZ in the vicinity of the bond with the metal layer which has been welded at a maximum temperature of more than 1,400°C, the matrix component system eliminates the effect of enhancing toughness, which is a disadvantage.

Further, JP-A-2001-226739 proposes that the coarsening of austenite grains which would occur when subject to high temperature over an extended period of time be suppressed by controlling the number of inclusion grains to enhance the HAZ toughness. This approach involves multi-pass welding resulting in the enhancement of the HAZ toughness to a range of from 100 to 200 (J) at vE-40°C. However, the control over these inclusions can be difficultly made in ordinary steel-making procedures, leading to cost rise in melting in electric furnace in particular.

Moreover, JP-B-55-26264 proposes that TiN be finely precipitated to enhance the HAZ toughness. However, this approach involves heating to a temperature of from 1,250°C to 1,400°C and subsequent heating under pressure or to a temperature of 1,150°C or less. Thus, this approach is disadvantageous in that the additional step of reheating to a temperature of 1, 150°C or less adds to cost.

Further, as disclosed in JP-A-2004-149821, it is proposed that the low temperature toughness of the matrix be enhanced by optimizing the alloying elements or controlling Ti/N. However, the matrix obtained by this approach lacks strength and thus cannot satisfy X-70 requirements.

JPH10298645 discloses the manufacture of hot rolled high tensile strength steel plate, JPH1161328 discloses high manganese ingot, its continuous casting and manufacture of high tensile steel.

It has thus been heretofore desired to satisfy the user's requirement for ordinary QT (quenched, tempered) steel material that the desired low temperature toughness of the matrix, the bond of the matrix with the welded portion obtained by one-pass welding and the heat affected zone be assured. An aim of the invention is to provide a clad steel sheet that satisfies the following requirements by combined addition of alloying elements.

Firstly, in order to enhance the low temperature toughness of the matrix while maintaining the strength of related art API X70, the grains are ultrafinely divided to A. G. S (Austenite Grain Size) of about 10 to 12.

Secondly, in order to enhance the low temperature toughness of the bond of the matrix with the welded portion and the heat affected zone of the matrix, the fine division of the grains and the inhibition of coarsening of the grains are effected.

Thirdly, the hardness of the HAZ is reduced to HV270 or less without forming any martensite structures in the matrix and the heat affected zone.

### SUMMARY OF THE INVENTION

An object of the invention to provide a matrix for clad steel which satisfies high strength requirements and exhibits an excellent low temperature toughness in the welded portion and a method for the production of a clad steel from the matrix for clad steel.

In the constitution of the invention, many test materials mainly composed of API X70 steel were subjected to one-pass welding. Thus, these test materials were extensively studied for the effect of alloying elements on the short term tensile properties and Charpy impact strength. As a result, it was found that the optimization of balance of the added amount of alloying elements makes it possible to obtain a novel alloy composition which exhibits an excellent low temperature toughness in the matrix, the welding heat affected zone during one-pass welding and the matrix/welded metal bond and surpasses much API X70 steel in these properties while maintaining the strength characteristic to the related art. The invention has thus been worked out.

In other words, according to a first aspect of the invention, a matrix for clad steel consists of: from 0.05% to 0.10% by mass of C, from 0.10% to 0.30% by mass of Si, from 1.30% to 1.60% by mass of Mn, 0.015% or less by mass of P, 0.003% or less by mass of S, from 0.10% to 0.50% by mass of Ni, from 0.03% to 0.5% by mass of Cr, from 0.05% to 0.50% by mass of Cu, from 0.08% to 0.50% by mass of Mo, from 0.015% to 0.040% by mass of V, from 0.04% to 0.10% by mass of Nb, from 0.005% to 0.020% by mass of Ti, from 0.015% to 0.035% by mass of Al, from 0.0010% to 0.0040% by mass of Ca, from 0.0030% to 0.0100% by mass of N, and the balance being Fe and unavoidable impurities, wherein the Ti/N ratio is in a range of from 1.5 to 3.0.

According to a second aspect of the invention, the austenite grain size number after a refining is from 10 to 12.

According to a third aspect of the invention, a method for producing a clad steel comprises preparing a matrix for clad steel having a formulation defined in any one of Claims 1 to 2 by melting, subjecting the matrix to clad hot rolling, refining the matrix in an austenizing temperature range of from 900°C to 1,100 °C to obtain an austenite grain size number from 10 to 12, and tempering the matrix at a temperature of from 550°C to 650°C.

In accordance with the invention, the matrix for clad steel has a high strength by virtue of a proper formulation. Further, in the matrix and the heat affected zone obtained by one-pass welding, which are required to have a low temperature toughness, the grains of the matrix are ultrafinely divided. At the same time, the coarsening of grains in the HAZ can be suppressed. The matrix thus obtained exhibits an excellent high toughness.

In other words, the matrix for clad steel of the invention exhibits a remarkably enhanced low temperature toughness in the bond of matrix with welded portion after one-pass welding and the heat affected zone of matrix while keeping the same strength as API X70 as compared with the related art API X70 steel material.

According to the method for the production of clad steel of the invention, a matrix having a grain size number of 10 to 12 can be prepared with an excellent low temperature toughness. Further, no martensite structure is formed in the matrix and the heat affected zone, making it possible to limit the HAZ hardness to HV270 or less. Thus, the susceptibility to low temperature cracking during welding can be lowered. Further, since the matrix for clad steel can be produced by ordinary hardening/tempering method requiring no additional heat treatment, the number of steps and the production cost can be reduced. Moreover, the hardness of the welded HAZ can be limited, making it possible to raise the strength of the matrix and hence reduce the thickness and weight of the steel plate.

### BRIEF DESCRIPTION OF THE DRAWINGS

Fig. 1 is a diagram illustrating the measurements of the hardness distribution of the welded portion of the inventive steel materials TP1 (test sample No.1), TP2 (test sample No.2) and TP3 (test sample No.3);
Fig. 2 is a diagram illustrating the relationship between Ti/N and low temperature toughness of the composition of a test sample; and
Fig. 3 is a photographic substitute diagram illustrating the microstructure of the matrix of the inventive steel materials TP1 (test sample No.1) and TP2 (test sample No.2).

### DETAILED DESCRIPTION OF THE PREFERRED EMBODIMENTS

Embodiments of implementation of the invention will be described hereinafter.

The range of limitation of components in the invention will be further described hereinafter. The unit of the following contents as used herein is % by mass unless otherwise specified.

### C: 0.05% to 0.10%

C is a component effective for the enhancement of the strength of steel. When the content of C falls below 0.05%, the resulting matrix cannot be provided with a strength high enough for ordinary welding. Thus, the content of C should be 0.05% or more. On the other hand, when C is excessively added, the resulting clad steel exhibits remarkably deteriorated weldability or HAZ toughness. Thus, the upper limit of C content is set to be 0.10%. For the same reasons, the upper limit of C content is preferably set to be 0.08%.

### Si: 0.10% to 0.30%

Si is a component required to ensure strength and the deoxidation of matrix. In order to ensure these effects, it is necessary that at least 0.10% of Si be added. However, when Si is excessively added, the resulting hardening of the HAZ causes the deterioration of toughness. Thus, the upper limit of Si content is set to be 0.30%. For the same reasons, the lower limit and upper limit of Si content are preferably set to be 0.15% and 0.25%, respectively.

### Mn: 1.30 to 1.60

Mn needs to be added in an amount of 1.30% or more as a component effective to ensure strength and toughness of matrix. Taking into account the toughness and cracking resistance of welded portion, the upper limit of Mn content is 1.60%. For the same reasons, the lower limit and upper limit of Mn content are preferably set to be 1.40% and 1.55%, respectively.

### P: 0.015% or less

P content is preferably as small as possible. However, since it adds to cost to reduce P content on an industrial basis, the upper limit of P content is set to be 0.015%.

### S: 0.003% or less

S content is preferably as small as possible. When S content is too great, the resulting matrix exhibits a remarkably deteriorated toughness. Thus, the upper limit of S content is set to be 0.003%.

### Ni: 0.10% to 0.50%

Ni is effective for the enhancement of strength and toughness of matrix. Ni content is set to be 0.10% or more. When Ni content falls below 0.10%, these effects cannot be sufficiently exerted. On the other hand, since the addition of Ni adds to production cost, the upper limit of Ni content is set to be 0.50%. For the same reasons, the lower limit and upper limit of Ni content are preferably set to be 0.20% and 0.40%, respectively.

### Cr: 0.03% to 0.5%

Cr acts to enhance the strength and toughness of matrix. However, since Cr is excessively incorporated in the HAZ, the resulting matrix exhibits a deteriorated toughness. Thus, Cr content is set to be 0.5% or less. For the same reasons, the lower limit of Cr is set to be 0.03% and the upper limit is preferably set to be 0.30%.

### Cu: 0.05% to 0.5%

Cu acts to enhance the strength of matrix. However, when Cu is excessively added, the resulting matrix is more susceptible to cracking. Thus, the lower limit and upper limit of Cu content are set to be 0.05% to 0.50%, respectively. For the same reasons, the upper limit of Cu content is preferably set to be 0.30%.

### Mo: 0.08% to 0.50%

Mo is an element which acts to stably enhance the strength and toughness of a matrix which has been subjected to solution heat treatment. However, when Mo content falls below 0.08%, these effects cannot be exerted. Thus, Mo content is set to be 0.08% or more. When Mo is excessively added, the toughness of the HAZ is impaired. Thus, the upper limit of Mo content is set to be 0.50%. For the same reasons, the lower limit and upper limit of Mo content are preferably set to be 0.10% and 0.30%, respectively.

### V: 0.015% to 0.040%

V is an element essential to ensure the strength of steel. However, when V content falls below 0.015%, the desired effect cannot be sufficiently exerted. Thus, V content is set to be 0.015% or more. When V content is too great, the toughness of steel is adversely affected. Thus, the upper limit of V content is set to be 0.040%. For the same reasons, the lower limit and upper limit of V content are preferably set to be 0.020% and 0.040%, respectively.

### Nb: 0.04% to 0.10%

Nb acts to prevent the coarsening of austenite grains and finely divide austenite grains during the heating of steel to solid solution temperature, making it possible to finely and uniformly disperse Nb carbide or the like in the matrix and hence raise the high temperature strength thereof. Thus, Nb content is set to be 0.04% or more. However, when Nb content exceeds 0.10%, the resulting steel lump can easily undergo segregation. Thus, the upper limit of Nb content is set to be 0.10%. For the same reasons, the upper limit of Nb content is preferably set to be 0.09%.

### Ti: 0.005% to 0.020%

Ti has an effect of finely dividing the steel texture which has been subjected to solution treatment as Nb to inhibit the coarsening of grains by virtue of the bonding to N described later. When the content of Ti falls below 0.005%, the resulting effect is insufficient. Thus, Ti content is set to be 0.005% or more. On the other hand, when the content of Ti exceeds 0.020%, the resulting notch effect causes drastic deterioration of toughness. Thus, the upper limit of Ti content is set to be 0.020%. For the same reasons, the upper limit of Ti content is preferably set to be 0.015%.

### Al: 0.015% to 0.035%

Al is an element effective as deoxidizer. Al also acts in the form of AlN to prevent the coarsening of austenite grains during solution treatment. When Al content falls below 0.015%, the desired effect cannot be insufficiently exerted. Thus, Al content is set to be 0.015% or more. However, when Al content exceeds 0.035%, the resulting dividing effect is eliminated and the toughness levels up. Further, when Al content exceeds 0.035%, AlN is excessively produced, causing the surface cracking of the steel lump. Thus, the upper limit of Al content is set to be 0.035%. For the same reasons, the lower limit of Al content is preferably set to be 0.025%.

### Ca: 0.0010% to 0.0040%

Ca has an effect of improving the resistance to hydrogen-induced cracking. Ca also forms a compound with S or the like. CaS thus formed is spherical and forms oxide to enhance impact value. This effect can be exerted particularly when Ca content is 0.0010% or more. However, when Ca content exceeds 0.0040%, the resulting steel lump can easily undergo surface cracking, exhibits a deteriorated resistance to hydrogen-induced cracking and produces coarse inclusions. Thus, the upper limit of Ca content is set to be 0.0040%. For the same reasons, the lower limit and upper limit of Ca content are preferably set to be 0.0020% and 0.0030%, respectively.

### N: 0.0030% to 0.0100%

N is precipitated in the form of TiN to exert an effect of enhancing the HAZ toughness. However, when N content falls below 0.0030%, the desired effect can be exerted less remarkably. Thus, the lower limit of N content is set to be 0.0030%. However, when N content exceeds 0.0100%, the amount of N in solid solution rises, causing deterioration of the HAZ toughness. Taking into account the enhancement of the HAZ toughness by fine precipitation of TiN according to the added amount of Ti, the upper limit of N is set to be 0.0100%.

### Ti/N: 1.5 to 3.0

Ti and N are elements essential for the production of TiN that enhances the toughness of the HAZ. A stable TiN is produced and the bond of matrix with welded portion and the heat affected zone of matrix are finely divided during welding, preventing the coarsening of grains by virtue of welding. In order to sufficiently exert these effects, the relationship between the content of Ti and N is important. Therefore, Ti/N ratio is limited. In some detail, when Ti/N ratio falls below 1.0, the grains are coarsened, causing a drastic drop in toughness. The lower limit of the Ti/N ratio is set to be 1.5. On the other hand, when Ti/N ratio exceeds 3.0, the resulting matrix exhibits a deteriorated toughness for the same reasons. Thus, the upper limit of the Ti/N ratio is set to be 3.0.

Grain size number: 10 to 12 (austenite grain size: A. G. S)

The ultrafine division of grains can be realized by the formulation of the matrix of the invention. In some detail, the aforementioned grain size can be obtained, e.g., by preparing a steel lump having the aforementioned formulation by melting, and then refining the steel lump.

Referring further to refining, the hot-rolled steel material thus prepared is cooled from the austenite temperature range of from 900°C to 1, 100°C and then tempered at a temperature of from 550°C to 650°C. The heating time during tempering may be from 0.5 to 1.0 hour. The aforementioned continuous refining process makes it possible to finely divide the matrix for clad steel to a grain size number ranging from 10 to 12.

The matrix for clad steel of the invention is provided with the aforementioned formulation and thus can be melted according to an ordinary method. The kind of the material to be combined with the matrix of the invention is selected according to the purpose. The combination of these materials is then subjected to clad rolling to form a clad steel. When the matrix for clad steel is used for natural gas pipe line, a high alloy such as Alloy 825 can be used as a cladding material. The thickness of the matrix for clad steel is preferably 50 mm or less. When the thickness of the matrix is 25 mm or more, one sheet of the matrix is rolled. When the thickness of the matrix is less than 25 mm, two sheets of the matrix can be rolled.

In the invention, the clad rolling conditions are not specifically limited and thus may be ordinary.

The clad steel thus obtained is subjected to solution treatment, i.e., heating to an austenizing temperature of from 900°C to 1,100°C, and then quench-hardened. The quenching may be carried out by water cooling or oil cooling (e.g., at a cooling rate of 200°C/min or more). Subsequently, the clad steel is subjected to tempering, i.e., heating to a temperature of from 550°C to 650°C. The heating time during tempering may be from 0.5 to 1.0 hours.

The aforementioned continuous refining process makes it possible to finely divide the matrix for clad steel to a grain size number of from 10 to 12. Further, when the matrix for clad steel is subjected to one-pass welding, no martensite structure is formed in the matrix and the heat affected zone, which makes it possible to limit the HAZ hardness to HV270 or less. Thus, the susceptibility to low temperature cracking during welding can be lowered.

The clad steel may be used as it is in sheet form or as clad steel pipe.

The aforementioned clad steel can be passed once each for the both sides thereof during welding. Even when subjected to one-pass welding, the clad steel can maintain a fine structure in the HAZ and hence a good toughness and have a HAZ hardness of HV270 or less. The aforementioned welding method is not specifically limited and thus may be any known method.

### (Example)

An example of the invention will be described hereinafter.

A test sample having the formulation set forth in Table 1 was melted in a vacuum induction melting furnace to prepare a rectangular steel lump having a weight of 25 kg which was then rolled to a thickness of 30 mm. The steel material was refined at a temperature of 960°C on the assumption that it corresponds to cladding material 316L, and then tempered at a temperature of 580°C.

The test sample thus refined was then measured for strength and low temperature toughness. The measurements are set forth in Table 2. As set forth in Table 2, the inventive matrix exhibited an excellent low temperature toughness while maintaining a strength corresponding to that of API X70. Referring particularly to impact properties, the inventive matrix exhibited a toughness as high as 200 (J) or more at vE-80°C. Further, impact properties of the bond of the welded portion and the heat affected zone of the matrix, in terms of impact properties of the heat affected zone after the one-pass welding, exhibited a toughness 100 (J) or more at vE-40°C.

The test sample was also subjected to welding with YM-55H as a weld material by a carbonic acid gas (MAG) welding method on the assumption that one-pass welding to clad steel was done.

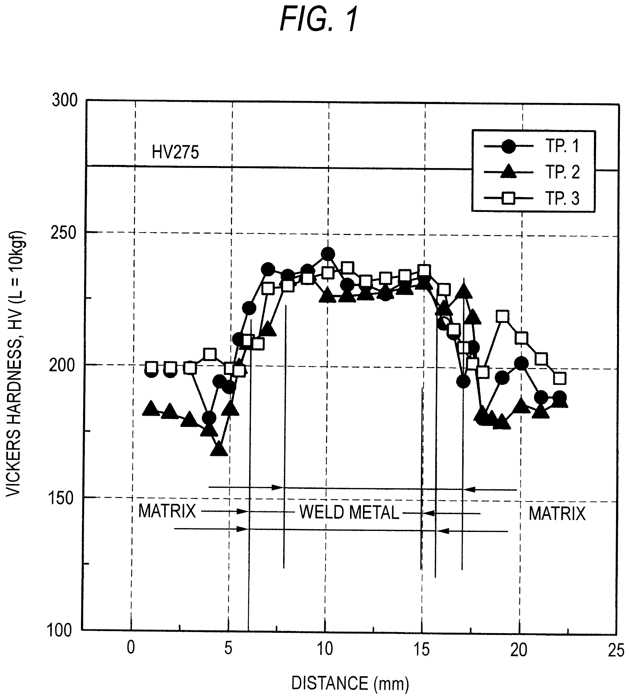

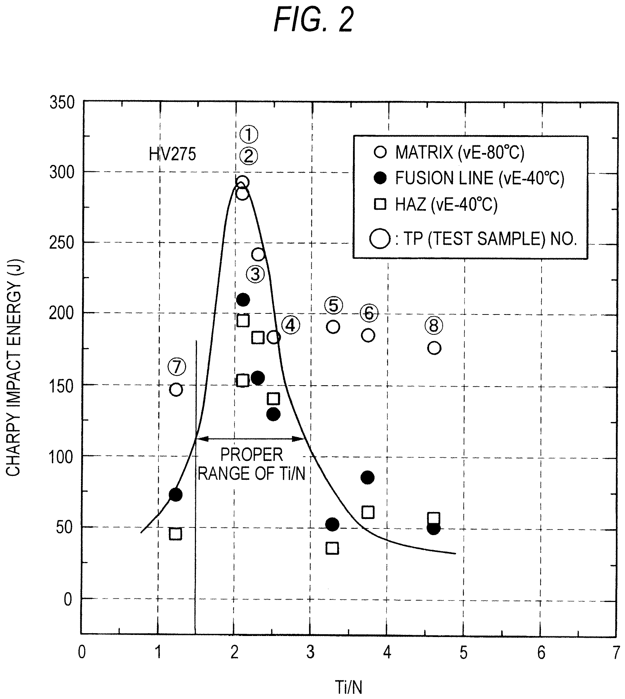

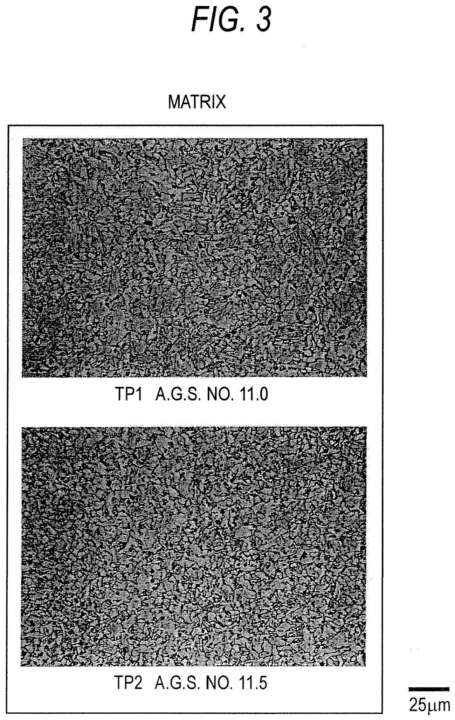

Fig. 1 depicts the hardness of the welded portion. The heat affected zone exhibited a highest hardness of about HV23, which is low for hardness after welding. This is because the structure of the region ranging from fusion line portion to the HAZ is bainite, which is less hard. As shown in photographic substitute diagram of Fig. 3, even the microstructure of the matrix has dense full bainite. The grain size of the matrix has A. G. S. No. of from 10 to 12. This is presumably because despite the incorporation of somewhat a lot of Nb, alloying elements such as Al, V, Ti, N and Ni are incorporated in combination in a well-balanced manner in a proper amount falling within the specified range, making a great contribution to the fine division of grains. The aforementioned advantage is attributed particularly to the adjustment of the balance of Ti and N thus incorporated to Ti/N of from 1.5 to 3.0 as shown in Fig. 2, leading to the production of stable TiN.

**[Table 1]**

| Test sample | No. | C | Si | Mn | P | S | Ni | Cr | Cu | Mo | Al | V | Nb | Ti | Ca | N* | Fe | Ti/N |
|---|---|---|---|---|---|---|---|---|---|---|---|---|---|---|---|---|---|---|
| Inventive steel material | 1 | .06 | .20 | 1.49 | .008 | .0030 | .31 | .16 | .15 | .11 | .03 | .034 | .057 | .012 | .0026 | 58 | Balance | 2.1 |
| | 2 | .07 | .20 | 1.48 | .009 | .0030 | .31 | .11 | .11 | .11 | .033 | .030 | .078 | .012 | .0024 | 57 | Balance | 2.1 |
| | 3 | .06 | .20 | 1.46 | .008 | .0030 | .29 | .16 | .06 | .16 | .034 | .040 | .042 | .013 | .0027 | 56 | Balance | 2.3 |
| | 4 | .06 | .20 | 1.52 | .008 | .0027 | .29 | .03 | .05 | .19 | .031 | .035 | .080 | .014 | .0027 | 55 | Balance | 2.5 |
| Comparative steel material | 5 | .07 | .20 | 1.53 | .008 | .0025 | .29 | .03 | .10 | .25 | .033 | .050 | .040 | .020 | .0018 | 61 | Balance | 3.3 |
| | 6 | .06 | .19 | 1.48 | .007 | .0026 | .29 | .03 | .19 | .19 | .032 | .041 | .039 | .015 | .0018 | 40 | Balance | 3.8 |
| | 7 | .06 | .21 | 1.55 | .009 | .0025 | .31 | .03 | .25 | .25 | .032 | .047 | .030 | .007 | .0018 | 61 | Balance | 1.2 |
| | 8 | .05 | .20 | 1.48 | .009 | .0023 | .03 | .02 | .01 | .21 | .026 | .010 | .044 | .025 | .0016 | 54 | Balance | 4.6 |

| | | | | | | | | | | | | | | | | | | |
|---|---|---|---|---|---|---|---|---|---|---|---|---|---|---|---|---|---|---|
| *ppm | | | | | | | | | | | | | | | | | | |

**[Table 2]**

| Test sample No. | | Matrix | Matrix tensile properties | | | | Material impact properties | | HAZ impact properties (vE-40°C, J) | |
|---|---|---|---|---|---|---|---|---|---|---|
| | | Grain size (A.G.S) | 0.2%YS (kgf/mm²) | T.S (kgf/mm²) | El (%) | R.A. (%) | vE-80°C (J) | vE-40°C (J) | Fusion Line | HAZ |
| Inventive steel material | 1 | 11.0 | 53.1 | 62.9 | 27.4 | 82.0 | 206 | 285 | 210 | 195 |
| | 2 | 11.5 | 51.9 | 61.8 | 29.2 | 83.3 | 250 | 293 | 153 | 153 |
| | 3 | 10.3 | 55.1 | 64.9 | 26.2 | 78.3 | 208 | 242 | 155 | 183 |
| | 4 | 10.1 | 58.2 | 67.7 | 27.3 | 69.3 | 205 | 181 | 130 | 140 |
| Comparative steel material | 5 | 6.5 | 57.5 | 68.0 | 24.2 | 64.2 | 61 | 190 | 53 | 35 |
| | 6 | 7.3 | 57.4 | 67.8 | 26.7 | 74.0 | 60 | 184 | 85 | 60 |
| | 7 | 6.5 | 59.5 | 69.5 | 26.0 | 73.0 | 66 | 147 | 75 | 45 |
| | 8 | 8.1 | 55.1 | 65.0 | 26.0 | 74.6 | 127 | 175 | 50 | 56 |

## Claims

1. A matrix for clad steel consisting of: from 0.05% to 0.10% by mass of C, from 0.10% to 0.30% by mass of Si, from 1.30% to 1.60% by mass of Mn, 0.015% or less by mass of P, 0.003% or less by mass of S, from 0.10% to 0.50% by mass of Ni, from 0.03% to 0.5% by mass of Cr, from 0.05% to 0.50% by mass of Cu, from 0.08% to 0.50% by mass of Mo, from 0.015% to 0.040% by mass of V, from 0.04% to 0.10% by mass of Nb, from 0.005% to 0.020% by mass of Ti, from 0.015% to 0.035% by mass of Al, from 0.0010% to 0.0040% by mass of Ca, from 0.0030% to 0.0100% by mass of N, and the balance being Fe and unavoidable impurities, wherein the Ti/N ratio is in a range of from 1.5 to 3.0.

2. The matrix for clad steel according to claim 1, wherein the austenite grain size number after a refining is from 10 to 12.

3. A method for producing a clad steel comprising:
preparing a matrix for clad steel having a formulation according to claim 1 by melting;
subjecting the matrix to clad hot rolling;
refining the matrix in an austenizing temperature range of from 900°C to 1, 100°C to obtain an austenite grain size number from 10 to 12; and
tempering the matrix at a temperature of from 550°C to 650°C.

## Patentansprüche

1. Matrix für plattierten Stahl, bestehend aus: 0,05 bis 0,10 Masse-% C, 0,10 bis 0,30 Masse-% Si, 1,30 bis 1,60 Masse-% Mn, 0,015 oder weniger Masse-% P, 0,003 oder weniger Masse-% S, 0,10 bis 0,50 Masse % Ni, 0,03 bis 0,5 Masse-% Cr, 0,05 bis 0,50 Masse-% Cu, 0,08-0,50 Masse-% Mo, 0,015 bis 0,040 Masse-% V, 0,04 bis 0,10 Masse-% Nb, 0,005 bis 0,020 Masse-% Ti, 0,015 bis 0,035 Masse-% AI, 0,0010 bis 0,0040 Masse-% Ca, 0,0030 bis 0,0100 Masse-% N, wobei der Rest Fe und unvermeidliche Verunreinigungen ist, wobei das Ti/N-Verhältnis in einem Bereich von 1,5 bis 3,0 liegt.

2. Matrix für plattierten Stahl nach Anspruch 1, wobei die Austenitkorngrößenzahl nach dem Vergüten 10 bis 12 beträgt.

3. Verfahren für die Herstellung eines plattierten Stahls, umfassend:
Herstellen einer Matrix für plattierten Stahl, die eine Formulierung nach Anspruch 1 aufweist, durch Schmelzen,
Unterwerfen der Matrix einem Plattierungsheißwalzen,
Vergüten der Matrix in einem Austenitisierungstemperaturbereich U von 900 °C bis 1.100 °C, um eine Austenitkorngrößenzahl von 10 bis 12 zu erhalten, und Anlassen der Matrix bei einer Temperatur von 550 °C bis 650 °C.

## Revendications

1. Matrice pour acier plaqué consistant en : de 0,05 % à 0,10 % en masse de C, de 0,10 % à 0,30 % en masse de Si, de 1,30 % à 1,60 % en masse de Mn, 0,015 % en masse ou moins de P, 0,003 % en masse ou moins de S, de 0,10 % à 0,50 % en masse de Ni, de 0,03 % à 0,5 % en masse de Cr, de 0,05 % à 0,50 % en masse de Cu, de 0,08 % à 0,50 % en masse de Mo, de 0,015 % à 0,040 % en masse de V, de 0,04 % à 0,10 % en masse de Nb, de 0,005 % à 0,020 % en masse de Ti, de 0,015 % à 0,035 % en masse d'Al, de 0,0010 % à 0,0040 % en masse de Ca, de 0,0030 % à 0,0100 % en masse de N, le reste étant du Fe et des impuretés inévitables, dans laquelle le rapport Ti/N est situé dans la plage allant de 1,5 à 3,0.

2. Matrice pour acier plaqué selon la revendication 1, dans laquelle le numéro de taille des grains d'austénite après un affinage est de 10 à 12.

3. Procédé pour produire un acier plaqué comprenant :
la préparation d'une matrice pour acier plaqué ayant une formulation selon la revendication 1 par fusion ;
la soumission de la matrice à un laminage à chaud de placage ;
l'affinage de la matrice dans une plage de température d'austénisation allant de 900 °C à 1 100 °C pour obtenir un numéro de taille des grains d'austénite de 10 à 12 ; et
le revenu de la matrice à une température de 550 °C à 650 °C.
